# EUROPEAN PATENT APPLICATION

(11) **EP 4 614 598 A1**
(43) Date of publication of application: **10.09.2025**
(21) Application number: 24869555.3
(22) Date of filing: 22.01.2024
(51) Int. Cl.: H01M 4/36, H01M 4/587, H01M 4/04, H01M 10/0525, H01M 4/62, C01B 32/21

(54) **NEGATIVE ELECTRODE MATERIAL AND PREPARATION METHOD THEREFOR, AND LITHIUM-ION BATTERY**

(30) Priority: 27.09.2023 CN 202311279012
(71) Applicant: BTR New Material Group Co., Ltd., Shenzhen, Guangdong 518106 (CN)
(72) Inventor: DONG, Hang, Shenzhen, Guangdong 518106 (CN); ZHOU, Haihui, Shenzhen, Guangdong 518106 (CN); XU, Tao, Shenzhen, Guangdong 518106 (CN); HE, Peng, Shenzhen, Guangdong 518106 (CN); REN, Jianguo, Shenzhen, Guangdong 518106 (CN); HE, Xueqin, Shenzhen, Guangdong 518106 (CN)
(74) Representative: Novagraaf Technologies
(86) International application number: PCT/CN2024/073436
(87) International publication number: WO 2025/065983

(57) **Abstract**

An anode material and a preparation method thereof, and a lithium ion battery. The anode material includes a core and a compound layer located on at least partial surface of the core; and the core includes graphite, and the compound layer includes a carbonaceous material and a non-carbonaceous material. As for the anode material, by means of a synergistic effect of the carbonaceous material and the non-carbonaceous material in the compound layer, a specific surface value of the anode material can be reduced, the interface stability of the anode material can be enhanced, the wettability of electrolyte can be improved, an interface side reaction can be reduced, and the lithium ion transmission efficiency can be improved, thereby improving the electrochemical performance of the anode material.

## Description

This application claims priority to Chinese Patent Application No. 202311279012.8 filed to the China National Intellectual Property Administration on September 27, 2023 and entitled "Anode Material and Preparation Method Thereof, and Lithium Ion Battery", the disclosure of which is hereby incorporated by reference in its entirety.

### Technical Field

The present disclosure relates to the technical field of anode materials, and specifically, to an anode material and a preparation method thereof, and a lithium ion battery.

### Background

By virtue of advantages of being high in energy density, long in cycle life, small in environmental pollution, free of memory effect, etc., lithium ion batteries have achieved a wide range of applications in the fields of portable electronic devices, electric vehicles, unmanned aerial vehicles, etc. In recent years, as the application scenarios of the lithium ion batteries have been further enriched, the demand for their performance has risen. The performance indexes of the lithium ion batteries are closely related to the electrode materials, such that it is very necessary to further improve the performance of the anode materials for the lithium ion batteries. Graphite materials have achieved a wide range of commercial applications in the field of the anode materials for the lithium ion batteries. However, conventional graphite materials still have disadvantages such as poor compatibility with electrolyte, unstable Solid Electrolyte Interface (SEI) film, etc., resulting in low initial coulombic efficiency, poor dynamic transmission, and continuous decay of cycling capacities. It has been found that the electrochemical performance of the graphite materials may be improved by performing surface coating and compounding on graphite using various modifying agents.

At present, coating layers are mainly classified into carbonaceous materials and non-carbonaceous materials. The carbonaceous material is often coated with asphalt or resin as a coated precursor, and through solid phase or liquid phase mixing and high temperature carbonization treatment, the precursor is converted into soft carbon or hard carbon material and compounded on graphite particles, such that the reduction of specific surface values of the graphite materials and the improvement of electrolyte compatibility can be realized. However, the product of carbonization of the asphalt or resin is still a carbon material in nature, and still undergoes an irreversible reaction with electrolyte components at low potential, resulting in continuous decomposition and repair recombination of an interface layer of the graphite material, causing the battery capacity to continue to decline.

Therefore, how to improve the interface stability of an anode material and reduce an interface side reaction is one of the technical problems that still need to be solved.

### Summary

The present disclosure is intended to provide an anode material and a preparation method thereof, and a lithium ion battery. As for the anode material, by means of a synergistic effect of a carbonaceous material and a non-carbonaceous material in the compound layer, a specific surface value of the anode material can be reduced, the interface stability of the anode material can be enhanced, the wettability of electrolyte can be improved, an interface side reaction can be reduced, and the lithium ion transmission efficiency can be improved, thereby improving the electrochemical performance of the anode material.

In a first aspect, the present disclosure provides an anode material. The anode material includes a core and a compound layer located on at least partial surface of the core; and the core includes graphite, and the compound layer includes a carbonaceous material and a non-carbonaceous material.

In some implementations, the non-carbonaceous material is dispersed in the carbonaceous material.

In some implementations, a general chemical formula of the non-carbonaceous material is AₓB_{y}, where 1≤x≤3, 1≤y≤5, element A includes at least one of Li, Na, K, Ca, Mg, Al, Zn, Ti, Nb, Zr, Mo, P, Si, or B, and element B includes at least one of B, O, F, Si, P, S, Br, or Cl.

In some implementations, the graphite includes at least one of natural graphite, artificial graphite, or microcrystalline graphite.

In some implementations, a median particle size of the core is D₅₀, where 0.5 µm≤D₅₀≤30 µm;
In some implementations, a mass content of carbon in the graphite is ≥80%.

In some implementations, the carbonaceous material includes at least one of amorphous carbon or graphite carbon.

In some implementations, a thickness of the compound layer is 1 nm-200 nm.

In some implementations, the non-carbonaceous material includes at least one of LiF, NaF, MgF₂, MgO, P₂O₅, Al₂O₃, SiO₂, or B₂O₃.

In some implementations, an average particle size of the non-carbonaceous material is G, and G≤150 nm.

In some implementations, a mass ratio of the compound layer to the core is C, and 0.01≤C≤0.5.

In some implementations, a mass ratio of the carbonaceous material to the non-carbonaceous material is D, and 0.1≤D≤80.

In some implementations, powder conductivity of the core is E₁, powder conductivity of the anode material is E₂, a ratio of E2 to E₁ is E, and 1 < E < 1000.

In some implementations, a specific surface area of the core is 6 m²/g-15 m²/g.

In some implementations, a specific surface area of the anode material is 1 m²/g-5m²/g.

In a second aspect, the present disclosure provides a method for preparing an anode material, including the following steps.

A first precursor is prepared, where the first precursor includes a core and a polymer layer formed on a surface of the core, and the core includes graphite.

An inorganic salt is attached to a surface of the first precursor to obtain a second precursor.

A carbonization treatment is performed on the second precursor to obtain an anode material.

In some implementations, preparing the first precursor includes the following steps: a polymerization reaction is performed on a first mixed solution containing the graphite and an organic molecular monomer, and solid-liquid separation and drying are performed to obtain the first precursor.

In some implementations, attaching the inorganic salt to the surface of the first precursor to obtain the second precursor includes the following steps: a second mixed solution containing the first precursor and the inorganic salt is dried to obtain a second precursor.

In some implementations, the graphite includes at least one of natural graphite, artificial graphite, or microcrystalline graphite.

In some implementations, a median particle size of the graphite is 0.5 µm-30 µm.

In some implementations, a mass ratio of the graphite to the organic molecular monomer is 1:(0.01-0.4).

In some implementations, the organic molecular monomer includes at least one of aniline, styrene, fluorostyrene, hydroxyethyl acrylate, acrylate, pyrrole, vinylidene fluoride, tetrafluoroethylene, or dopamine.

In some implementations, the first mixed solution and the second mixed solution both include solvents, and the solvents include at least one of water, methanol, ethanol, acetone, N-methyl-2-pyrrolidone, or N,N-dimethylformamide.

In some implementations, the first mixed solution further includes an auxiliary agent.

In some implementations, the first mixed solution further includes the auxiliary agent, and a mass concentration of the auxiliary agent in the first mixed solution is 0.01 mol/L-4 mol/L.

In some implementations, the first mixed solution further includes the auxiliary agent, the auxiliary agent includes an initiator, and the initiator includes at least one of ammonium persulfate, sodium persulfate, potassium persulfate, aluminum chloride, or hydrogen peroxide.

In some implementations, the first mixed solution further includes the auxiliary agent, the auxiliary agent includes a catalyst, and the catalyst includes at least one of sodium hydroxide, lithium hydroxide, potassium hydroxide, aqueous ammonia, or sodium carbonate.

In some implementations, the first mixed solution further includes the auxiliary agent, the auxiliary agent includes a pH regulator, and the pH regulator includes at least one of an acidic pH reagent or an alkaline pH reagent.

In some implementations, the first mixed solution further includes the auxiliary agent, the auxiliary agent includes the pH regulator, and the pH of the first mixed solution is 4-10.

In some implementations, the first mixed solution further includes the auxiliary agent, the auxiliary agent includes the pH regulator, and the pH regulator includes at least one of hydrochloric acid, sulfuric acid, phosphoric acid, or nitric acid.

In some implementations, the first mixed solution further includes the auxiliary agent, the auxiliary agent includes the pH regulator, and the pH regulator includes at least one of lithium hydroxide, sodium hydroxide, potassium hydroxide, sodium carbonate, or sodium bicarbonate.

In some implementations, a temperature for the polymerization reaction is 40 °C-100 °C.

In some implementations, a time for the polymerization reaction is 3 h-48 h.

In some implementations, the polymerization reaction is performed while stirring.

In some implementations, the polymerization reaction is performed in a stirring state, and a stirring rate is 50 r/min-1000 r/min.

In some implementations, the solid-liquid separation includes at least one of filtration or centrifugation.

In some implementations, the drying includes at least one of natural volatilization, blast drying, flash drying, freeze drying, inert atmosphere protection drying, or vacuum drying.

In some implementations, the inorganic salt includes at least one of lithium hydroxide, sodium hydroxide, potassium hydroxide, magnesium nitrate, calcium chloride, aluminum nitrate, zinc nitrate, titanium n-propoxide, columbium oxalate, zirconyl chloride octahydrate, ammonium molybdate tetrahydrate, ammonium dihydrogen phosphate, diammonium hydrogen phosphate, sodium metasilicate, sodium borate, ammonium fluoride, titanium oxysulfate, zinc bromide, or zirconium chloride.

In some implementations, a mass ratio of the first precursor to the inorganic salt is 1:(0.001-0.1).

In some implementations, the drying includes at least one of natural volatilization, blast drying, flash drying, freeze drying, inert atmosphere protection drying, or vacuum drying.

In some implementations, a temperature for drying is 60 °C-600 °C.

In some implementations, a time for drying is 0.5 h-48 h.

In some implementations, carbonization is performed under a protective atmosphere.

In some implementations, the carbonization treatment is performed under the protective atmosphere, and the protective atmosphere includes at least one of nitrogen, helium, neon, argon, or air.

In some implementations, a heating rate of the carbonization treatment is 1 °C/min-20 °C/min.

In some implementations, a temperature-holding temperature for the carbonization treatment is 600 °C-2500 °C.

In some embodiments, a temperature-holding time for the carbonization treatment is 0.1 h-10 h.

In a third aspect, the present disclosure provides a lithium ion battery. The lithium ion battery includes the anode material of the first aspect or an anode material prepared by the method for preparing an anode material of the second aspect.

Compared with the related art, the technical solution of the present disclosure has at least the following beneficial effects.

In the anode material provided in the present disclosure, the anode material includes the core and the compound layer located on at least partial surface of the core. The core includes graphite. The compound layer includes a carbonaceous material and a non-carbonaceous material. By means of a synergistic effect of the carbonaceous material and the non-carbonaceous material in the compound layer, a specific surface value of the anode material can be reduced, and the high-temperature storage performance and electrode plate processing performance of the anode material can be improved. The interface stability of the anode material may also be improved, an interface side reaction may be reduced, the wettability of electrolyte may be improved, and lithium ion transmission efficiency may be improved, thereby improving the reversible capacity, initial coulombic efficiency, and rate performance.

In the method for preparing an anode material provided in the present disclosure, by performing the polymerization reaction on the first mixed solution containing the graphite and the organic molecular monomer to obtain the first precursor, a polymer formed through polymerization of the organic molecular monomer is compounded on surfaces of graphite particles to form the polymer layer. The polymer has a highly-reactive functional group. Then, the second mixed solution containing the first precursor and the inorganic salt is well mixed and dried, inorganic ions are formed through hydrolysis of the inorganic salt in the second mixed solution, and through a grafting reaction between the highly-reactive functional group in the polymer and the inorganic ions, the inorganic ions are grafted and introduced into the polymer layer on the surfaces of the graphite particles, so as to obtain the second precursor. Finally, the carbonization treatment is performed on the second precursor, through the carbonization treatment, in situ cracking occurs in the organic molecules in the polymer layer to obtain the carbonaceous material, and the inorganic ions are in situ converted into the non-carbonaceous material at the same time, so as to form the compound layer containing the carbonaceous material and the non-carbonaceous material on the surfaces of the graphite particles. The surface of the prepared anode material has the uniformly-coated compound layer. By means of a synergistic effect of the carbonaceous material and the non-carbonaceous material in the compound layer, a specific surface value of the anode material can be reduced, and the high-temperature storage performance and electrode plate processing performance of the anode material can be improved. The interface stability of the anode material may also be improved, an interface side reaction may be reduced, the wettability of electrolyte may be improved, and lithium ion transmission efficiency may be improved, thereby improving the reversible capacity, initial coulombic efficiency, and rate performance.

### Brief Description of the Drawings

The present disclosure is further described below with reference to the drawings and embodiments.
Fig. 1 is a flowchart of a process for preparing an anode material according to an embodiment of the present disclosure.
Fig. 2 is a schematic structural diagram of an anode material according to an embodiment of the present disclosure.
Fig. 3a is a scanning electron microscope diagram of an anode material according to Embodiment 1 of the present disclosure.
Fig. 3b is a scanning electron microscope diagram of an anode material at another magnification according to Embodiment 1 of the present disclosure.
Fig. 4 is a cross-sectional scanning electron microscope diagram of an anode material according Embodiment 1 of the present disclosure.

### Detailed Description of the Embodiments

In order to better understand the technical solutions of the present disclosure, embodiments of the present disclosure are described in detail below with reference to the drawings.

It is to be clear that the described embodiments are only part of the embodiments of the present disclosure, not all the embodiments. All other embodiments obtained by those of ordinary skill in the art on the basis of the embodiments in the present disclosure without creative work fall within the scope of protection of the present disclosure.

The terms used in the embodiments of the present disclosure are only for describing specific embodiments and are not intended to limit the present disclosure. Singular forms "a/an", "said", and "the" used in the embodiments and appended claims of the present disclosure are also intended to include plural forms unless other meanings are clearly expressed in the context.

It is to be understood that, the term "and/or"used here is merely an association relationship describing related objects, which means that there may be three relationships, for example, A and/or B may indicate three cases: A exists alone, A and B exist simultaneously, and B exists alone. In addition, the character "/" as used herein generally indicates an "or" relationship between the front and back associated objects.

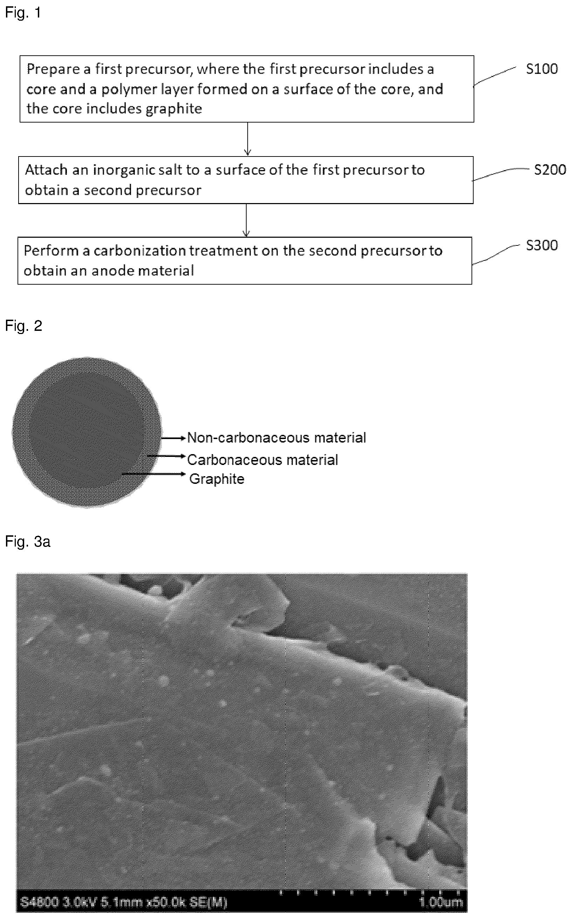

In a first aspect, the present disclosure provides an anode material. As shown in Fig. 2, the anode material includes a core and a compound layer located on at least partial surface of the core; and the core includes graphite, and the compound layer includes a carbonaceous material and a non-carbonaceous material.

In the anode material provided in the present disclosure, the anode material includes the core and the compound layer located on at least partial surface of the core. The core includes graphite. The compound layer includes a carbonaceous material and a non-carbonaceous material. By means of a synergistic effect of the carbonaceous material and the non-carbonaceous material in the compound layer, a specific surface value of the anode material can be reduced, and the high-temperature storage performance and electrode plate processing performance of the anode material can be improved. The interface stability of the anode material may also be improved, an interface side reaction may be reduced, the wettability of electrolyte may be improved, and lithium ion transmission efficiency may be improved, thereby improving the reversible capacity, initial coulombic efficiency, and rating performance.

In some implementations, the graphite includes at least one of natural graphite, artificial graphite, or microcrystalline graphite.

In some implementations, a median particle size of the core is D₅₀, where 0.5 µm≤D₅₀≤30 µm, and may specifically be 0.5 µm, 1 µm, 3.5 µm, 5 µm, 8 µm, 10 µm, 12 µm, 15 µm, 18 µm, 19.7 µm, 21.3 µm, 24.5 µm, 26.1 µm, 28.4 µm, 29 µm, 30 µm, or the like, or may definitely be other values within the above range, which is not limited herein.

In some implementations, a mass content of carbon in the graphite is ≥80%, and may specifically be 80%, 85%, 86%, 87%, 88%, 89%, 90%, 91%, 92%, 93%, 94%, 95%, 96%, 98%, 99%, or the like, or may definitely be other values within the above range, which is not limited herein.

In some implementations, the carbonaceous material includes at least one of amorphous carbon or graphite carbon. Specifically, the amorphous carbon includes soft carbon and hard carbon. In some implementations, a thickness of the compound layer is 1 nm-200 nm. Specifically, the thickness of the compound layer may be 1 nm, 2 nm, 5 nm, 10 nm, 15 nm, 30 nm, 50 nm, 80 nm, 100 nm, 110 nm, 150 nm, 180 nm, 200 nm, or the like, which is not limited herein. When the compound layer is thinner, it is difficult for the carbonaceous material and the non-carbonaceous material to form a uniform coating effect on a surface of a graphite material, leading to a high specific surface area of the anode material. When the compound layer is too thick, the interface lithium ion transmission efficiency of the anode material is reduced, leading to deterioration of the rate performance of the anode material. Therefore, the thickness of the compound layer is optimized and controlled within a range of 1 nm-200 nm, such that the specific surface area of the anode material can be reduced, the high-temperature storage performance and electrode plate processing performance of the anode material can be improved, and the interface lithium ion transmission efficiency of the anode material can be improved, thereby improving the initial coulombic efficiency and rate performance of the anode material.

In some implementations, a general chemical formula of the non-carbonaceous material is AₓB_{y}, where 1≤x≤3, 1≤y≤5, element A includes at least one of Li, Na, K, Ca, Mg, Al, Zn, Ti, Nb, Zr, Mo, P, Si, or B, and element B includes at least one of B, O, F, Si, P, S, Br, or Cl.

In some implementations, element A includes at least one of Li, Na, Mg, Al, P, Si, or B; and element B is O or F.

In some implementations, the non-carbonaceous material is at least one of LiF, NaF, MgF₂, MgO, P₂O₅, Al₂O₃, SiO₂, or B₂O₃.

In some implementations, the non-carbonaceous material is dispersed in the carbonaceous material. It may be understood that, since the carbonaceous material is formed by an organic substance through carbonization, before the carbonization of the organic substance, the non-carbonaceous material may be attached to a surface of interior of the organic substance in an ionic form, so as to realize uniform compounding, thereby forming the compound layer formed by the non-carbonaceous material and the carbonaceous material that are distributed in a cross-linked interspersed manner.

In some implementations, an average particle size of the non-carbonaceous material is G, and G≤150 nm, and may specifically be 0.5 nm, 1 nm, 1.5 nm, 3.6 nm, 4.8 nm, 7 nm, 8.9 nm, 10 nm, 11.2 nm, 15 nm, 20 nm, 30 nm, 50 nm, 80 nm, 100 nm, 120 nm, 140 nm, 150 nm, or the like, but is not only limited to the enumerated values, and other values not enumerated within the value range are also applicable. When the average particle size of the non-carbonaceous material in the compound layer is too large, the non-carbonaceous material is difficultly uniformly distributed in the carbonaceous material, leading to a high specific surface area of the anode material and degradation of interface lithium ion transmission performance.

In the present disclosure, an S-4800 scanning electron microscope is used to observe the microscopic morphology of the surface of the anode material and the particle size of the non-carbonaceous material. A 1 µm*1 µm region is taken randomly on the single anode material particle, particle size distribution of the non-carbonaceous material in the region is counted, and the average particle size of the non-carbonaceous material is calculated as G.

In some implementations, a mass ratio of the compound layer to the core is C, and 0.01≤C≤0.5. A value of C may specifically be 0.01, 0.03, 0.07, 0.09, 0.1, 0.17, 0.25, 0.3, 0.35, 0.4, 0.42, 0.48, 0.5, or the like, which is not limited herein. When the C value is relatively low, the content of the compound layer in the anode material is low, difficultly forming an intact and uniform coating layer on the surface of the core, thus resulting in a relatively-large specific surface area of the anode material. When the C value is relatively high, the content of the compound layer in the anode material is high, the coating layer formed on the surface of the core is thick, resulting in poor dynamic performance of the anode material and a low capacity.

In some implementations, a mass ratio of the carbonaceous material to the non-carbonaceous material is D, and 0.1≤D≤80, and may specifically be 0.1, 0.5, 0.8, 1, 5, 10, 18, 24, 30, 35, 40, 50, 62, 74, 80, or the like, or may definitely be other values within the above range, which is not limited herein. When a D value is relatively low, the content of the non-carbonaceous material in the compound layer is high, resulting in the relatively-large specific surface area of the anode material. When the D value is relatively high, the content of the carbonaceous material in the compound layer is high, resulting in a reduction in the interface lithium ion transmission efficiency of the anode material, and deterioration of the rate performance of the anode material.

In some implementations, powder conductivity of the graphite is E₁, powder conductivity of the anode material is E₂, a ratio of E2 to E₁ is E, and 1 < E < 1000. A value of E may specifically be 1.01, 5, 10, 50, 100, 150, 200, 300, 400, 500, 600, 700, 800, 900, 1000, or the like, which is not limited herein. It is to be noted that, the graphite is powder conductivity of a graphite raw material that is not coated, and the powder conductivity of the anode material refers to the conductivity of the graphite that is coated with the compound layer. The value of E may indicate the conductivity of the anode material, and if the value of E is too small, the conductivity of the anode material is difficult to improve.

In some implementations, a specific surface area of the core is 6 m²/g-15 m²/g, and may specifically be 6 m²/g, 6.8 m²/g, 7.9 m²/g, 8.7 m²/g, 9.5 m²/g, 10 m²/g, 11.3 m²/g, 12.4 m²/g, 13.5 m²/g, 14 m²/g, 15 m²/g, or the like, or may definitely be other values within the above range, which is not limited herein.

In some implementations, a specific surface area of the anode material is 1 m²/g-5 m²/g, and may specifically be 1 m²/g, 1.5 m²/g, 2.3 m²/g, 2.8 m²/g, 3 m²/g, 3.5 m²/g, 4 m²/g, 4.8 m²/g, 5 m²/g, or the like, or may definitely be other values within the above range, which is not limited herein.

In the present disclosure, the anode material includes the core and the compound layer located on at least partial surface of the core. The compound layer is completely and uniformly coated on the surface of the core, such that the specific surface area of the anode material may be reduced. By controlling the specific surface area of the anode material within the range of 1 m²/g-5 m²/g, the high-temperature storage performance and electrode plate processing performance of the anode material are improved, thereby facilitating improvement of the cycling performance of a lithium ion battery prepared by the anode material.

In a second aspect, the present disclosure provides a method for preparing an anode material. As shown in Fig. 1, the method includes the following steps.

At S100, a first precursor is prepared, where the first precursor includes a core and a polymer layer formed on a surface of the core, and the core includes graphite.

At S200, an inorganic salt is attached to a surface of the first precursor to obtain a second precursor.

At S300, a carbonization treatment is performed on the second precursor to obtain an anode material.

In the method for preparing an anode material provided in the present disclosure, by performing the polymerization reaction on the first mixed solution containing the graphite and the organic molecular monomer to obtain the first precursor, a polymer formed through polymerization of the organic molecular monomer is compounded on surfaces of graphite particles to form the polymer layer. The polymer layer has a highly-reactive functional group. Then, the second mixed solution containing the first precursor and the inorganic salt is well mixed and dried, inorganic ions are formed through hydrolysis of the inorganic salt in the second mixed solution, and through a grafting reaction between the highly-reactive functional group in the polymer and the inorganic ions, the inorganic ions are grafted and introduced into the polymer layer on the surfaces of the graphite particles, so as to obtain the second precursor. Finally, the carbonization treatment is performed on the second precursor, through the carbonization treatment, in situ cracking occurs in the organic molecules in the polymer layer to obtain the carbonaceous material, and the inorganic ions are in situ converted into the non-carbonaceous material at the same time, so as to form the compound layer containing the carbonaceous material and the non-carbonaceous material on the surfaces of the graphite particles. The surface of the prepared anode material has the uniformly-coated compound layer. By means of a synergistic effect of the carbonaceous material and the non-carbonaceous material in the compound layer, a specific surface value of the anode material can be reduced, and the high-temperature storage performance and electrode plate processing performance of the anode material can be improved. The interface stability of the anode material may also be improved, an interface side reaction may be reduced, the wettability of electrolyte may be improved, and lithium ion transmission efficiency may be improved, thereby improving the reversible capacity, initial coulombic efficiency, and rate performance.

At S100, the first precursor is prepared, where the first precursor includes the core and the polymer layer formed on the surface of the core, and the core includes the graphite.

In some implementations, preparing the first precursor includes the following steps: a polymerization reaction is performed on a first mixed solution containing a graphite material and an organic molecular monomer, and solid-liquid separation and drying are performed to obtain the first precursor. The first precursor includes the core and the polymer layer located on the surface of the core, and the core includes the graphite.

In some implementations, the graphite material includes at least one of natural graphite, artificial graphite, or microcrystalline graphite.

In some implementations, a median particle size of the graphite is 0.5 µm-30 µm, and may specifically be 0.5 µm, 1 µm, 3.5 µm, 5 µm, 8 µm, 10 µm, 12 µm, 15 µm, 18 µm, 19.7 µm, 21.3 µm, 24.5 µm, 26.1 µm, 28.4 µm, 29 µm, 30 µm, or the like, or may definitely be other values within the above range, which is not limited herein.

In some implementations, a mass ratio of the graphite material to the organic molecular monomer is 1:(0.01-0.4), and may specifically be 1:0.01, 1:0.05, 1:0.1, 1:0.15, 1:0.2, 1:0.25, 1:0.3, 1:0.35, 1:0.4, etc., but is not only limited to the enumerated values, and other values not enumerated within the value range are also applicable. Situations that the polymer-coated layer is too thick and a capacity is affected may be reduced by controlling the mass ratio of the graphite material to the organic molecular monomer; and situations that an intact polymer-coated layer cannot be formed due to too few polymers, affecting the coating integrity and uniformity of the compound layer, thus not facilitating reduction in the specific surface area of the anode material may also be reduced. In the present disclosure, by controlling the mass ratio of the graphite material to the organic molecular monomer, it may ensure that the uniform polymer coating layer is formed on the surfaces of the graphite particles, thereby improving the coating uniformity of the graphite particles and the compound layer.

In some implementations, the organic molecular monomer includes at least one of aniline, styrene, fluorostyrene, hydroxyethyl acrylate, acrylate, pyrrole, vinylidene fluoride, tetrafluoroethylene, or dopamine.

In some implementations, the first mixed solution and the second mixed solution both include solvents, and the solvents include at least one of water, methanol, ethanol, acetone, N-methyl-2-pyrrolidone, or N,N-dimethylformamide.

In some implementations, the first mixed solution further includes an auxiliary agent. It may be understood that, the addition of a chemical reaction auxiliary agent may promote the polymerization reaction of the organic molecular monomer.

In some implementations, the first mixed solution further includes the auxiliary agent, and a mass concentration of the auxiliary agent in the first mixed solution is 0.01 mol/L-4 mol/L, and may specifically be 0.01 mol/L, 0.05 mol/L, 0.08 mol/L, 0.1 mol/L, 0.5 mol/L, 1 mol/L, 1.5 mol/L, 1.8 mol/L, 2 mol/L, 2.5 mol/L, 3 mol/L, 3.5 mol/L, 4 mol/L, or the like, or may definitely be other values within the above range, which is not limited herein.

In some implementations, the first mixed solution further includes the auxiliary agent, the auxiliary agent includes an initiator, and the initiator includes at least one of ammonium persulfate, sodium persulfate, potassium persulfate, aluminum chloride, or hydrogen peroxide.

In some implementations, the first mixed solution further includes the auxiliary agent, the auxiliary agent includes a catalyst, and the catalyst includes at least one of sodium hydroxide, lithium hydroxide, potassium hydroxide, aqueous ammonia, or sodium carbonate.

In some implementations, the first mixed solution further includes the auxiliary agent, the auxiliary agent includes a pH regulator, and the pH regulator includes at least one of an acidic pH reagent or an alkaline pH reagent. Specifically, the acidic pH regulator used may be at least one of hydrochloric acid, sulfuric acid, phosphoric acid, or nitric acid; and the alkaline pH regulator used may be at least one of lithium hydroxide, sodium hydroxide, potassium hydroxide, sodium carbonate, or sodium bicarbonate. It is to be noted that, a pH value of the first mixed solution here is regulated according to a polymerization reaction environment required by different organic molecular monomers.

In some implementations, the first mixed solution further includes the auxiliary agent, the auxiliary agent includes the pH regulator, and the pH of the first mixed solution is 4-10, and may specifically be 4, 5, 6, 7, 8, 9, 10, or the like, but is not only limited to the enumerated values, and other values not enumerated within the value range are also applicable.

In some implementations, a temperature for the polymerization reaction is 40 °C-100 °C. The temperature for the polymerization reaction may specifically be 40°C, 45 °C, 50°C, 55 °C, 60 °C, 70 °C, 80 °C, 90 °C, 100 °C, or the like,which is not limited herein.

In some implementations, a time for the polymerization reaction is 3 h-48 h, and may specifically be 3 h, 5 h, 8 h, 12 h, 15 h, 18 h, 20 h, 24 h, 30 h, 36 h, 40 h, 45 h, 48 h, or the like, and may definitely be other values within the above range, and is not limited herein.

In some implementations, the polymerization reaction is performed while stirring. The polymer formed through polymerization of the organic molecular monomer is wrapped around a surface of the graphite, so as to form the polymer layer.

In the present disclosure, by controlling the temperature and time for the polymerization reaction, as well as the addition of the chemical reaction auxiliary agent, etc., the organic molecular monomer can be promoted to undergo a full polymerization reaction, and in the stirring state, the polymer formed through polymerization can be more uniformly wrapped around the surface of the graphite.

In some implementations, the polymerization reaction is performed in a stirring state, and a stirring rate is 50 r/min-1000 r/min, and may specifically be 50 r/min, 100 r/min, 200 r/min, 300 r/min, 400 r/min, 500 r/min, 800 r/min, 1000 r/min, or the like, and may definitely be other values within the above range, and is not limited herein. By controlling the stirring rate within the above range, the nitrogen-containing polymer generated by the polymerization reaction is more uniformly wrapped around the surface of the graphite.

In some implementations, the polymerization reaction is performed under ultraviolet light radiation. It may be understood that, under ultraviolet light radiation, the polymerization reaction of the organic molecular monomer may be promoted.

In some implementations, the solid-liquid separation includes at least one of filtration or centrifugation.

At S200, the inorganic salt is attached to the surface of the first precursor to obtain the second precursor.

In some implementations, attaching the inorganic salt to the surface of the first precursor to obtain the second precursor includes the following steps: a second mixed solution containing the first precursor and the inorganic salt is dried to obtain a second precursor.

In some implementations, the inorganic salt includes at least one of lithium hydroxide, sodium hydroxide, potassium hydroxide, magnesium nitrate, calcium chloride, aluminum nitrate, zinc nitrate, titanium n-propoxide, columbium oxalate, zirconyl chloride octahydrate, ammonium molybdate tetrahydrate, ammonium dihydrogen phosphate, diammonium hydrogen phosphate, sodium metasilicate, sodium borate, ammonium fluoride, titanium oxysulfate, zinc bromide, or zirconium chloride.

In some implementations, a mass ratio of the first precursor to the inorganic salt is 1:(0.001-0.1), and may specifically be 1:0.001, 1:0.003, 1:0.005, 1:0.01, 1:0.02, 1:0.05, 1:06, 1:0.09, 1:0.1, or the like, but is not only limited to the enumerated values, and other values not enumerated within the value range are also applicable. By controlling the mass ratio of the first precursor to the inorganic salt, a mass ratio of the carbonaceous material to the non-carbonaceous material in the compound layer may be controlled, thereby reducing the case thatthe content of the carbonaceous material in the compound layer is too high, which resulting in a relatively-large specific surface area of the anode material. It is also possible to reduce cases in which the content of the non-carbonaceous material in the compound layer is too high, and thus the interface lithium ion transmission efficiency of the anode material is decreased and the rate performance of the anode material is deteriorated. In the present disclosure, by controlling the mass ratio of the first precursor to the inorganic salt, it may ensure that the anode material has a low specific surface area, and the interface lithium ion transmission efficiency of the anode material may also be improved, thereby improving the rate performance of the anode material.

In some implementations, the drying mode includes at least one of natural volatilization, blast drying, flash drying, freeze drying, inert atmosphere protection drying, or vacuum drying.

In some implementations, a drying temperature is 60 °C-600 °C, and may specifically be 60 °C, 100 °C, 200 °C, 300°C, 400 °C, 500 °C, 600 °C, or the like, and may definitely be other values within the above range, and is not limited herein.

In some implementations, a drying time is 0.5 h-48 h, and may specifically be 0.5 h, 1 h, 5 h, 10 h, 12 h, 15 h, 18 h, 24 h, 36 h, 45 h, 48 h, or the like, and may definitely be other values within the above range, and is not limited herein.

At S300, the carbonization treatment is performed on the second precursor to obtain the material.

In some implementations, the carbonization treatment is performed under the protective atmosphere, and the protective atmosphere includes at least one of nitrogen, helium, neon, argon, or air. It may be understood that, nitrogen, helium, neon, argon, or the like is introduced during the carbonization treatment as the protective atmosphere, such that an oxidation reaction of the graphite material may be effectively suppressed, and a burning loss of the graphite material at high temperature is reduced, thereby ensuring the stability and uniformity of the carbonization process. It is to be noted that, during a low temperature heat treatment, for example, a heat treatment temperature is below 700 °C, by introducing air, beneficial phase transition conversion of a surface state of the graphite material may be promoted, an oxygen-containing functional group is connected to the surface of the graphite material, such that the electrolyte wettability and interface stability of a composite graphite negative electrode material are improved, thereby improving the electrochemical performance of the composite graphite negative electrode material. Therefore, according to different actual application requirements and carbonization treatment conditions, the chemical composition and surface state of the graphite material may be effectively controlled by selecting an appropriate atmosphere protection mode, thereby adjusting performance and application effects thereof.

In some implementations, a heating rate of the carbonization treatment is 1 °C/min-20 °C/min, and may specifically be 1 °C/min, 2 °C/min, 3 °C/min, 4 °C/min, 5 °C/min, 6 °C/min, 7 °C/min, 8 °C/min, 9 °C/min, 10 °C/min, 12 °C/min, 15 °C/min, 18 °C/min, 20 °C/min, or the like, and may definitely be other values within the above range, and is not limited herein.

In some implementations, a temperature-holding temperature for the carbonization treatment is 600 °C-2500 °C, and may specifically be 600 °C, 800 °C, 900 °C, 1000 °C, 1200 °C, 1500 °C, 1800 °C, 2000 °C, 2200 °C, 2300 °C, 2500 °C, or the like, and may definitely be other values within the above range, and is not limited herein.

In some implementations, a temperature-holding time for the carbonization treatment is 0.1 h-10 h, and may specifically be 0.1 h, 0.5 h, 1 h, 2 h, 3 h, 4 h, 5 h, 6 h, 7 h, 8 h, 9 h, 10 h, or the like, and may definitely be other values within the above range, and is not limited herein.

In a third aspect, the present disclosure provides a lithium ion battery. The lithium ion battery includes the anode material of the first aspect or an anode material prepared by the method for preparing an anode material of the second aspect.

### Embodiment

### Embodiment 1

(1) 100 g of natural graphite was taken and dispersed in 200 ml of deionized water, and 5 g of an aniline monomer was added for full and uniform stirring, so as to form a first mixed solution.
(2) The above first mixed solution was placed at 45 °C for stirring, a stirring rate was controlled at 300 r/min, 15 ml (a concentration was 2 mol/L) of an ammonium persulfate aqueous solution was added dropwise at the same time, continuous stirring was performed for 120 min after the dropwise addition ended, so as to perform a polymerization reaction, and a first precursor was obtained through filtration and drying. The first precursor included a core and polyaniline located on a surface of the core, and the core included the natural graphite.
(3) 100 g of the first precursor was taken and well mixed with 200 ml of the deionized water, then 2.5 g of LiOH.H₂O was added and uniformly stirred to form a second mixed solution, and the second mixed solution was stirred at 90 °C to volatilize a solvent for a drying treatment, so as to obtain a second precursor.
(4) Under a nitrogen atmosphere, the second precursor was heated to 1250 °C, and then subjected to a carbonization treatment for 4 hours, so as to obtain an anode material.

The anode material prepared in this embodiment included a core and a compound layer located on at least partial surface of the core, the compound layer included hard carbon and lithium oxide (Li₂O), and the core included the natural graphite.

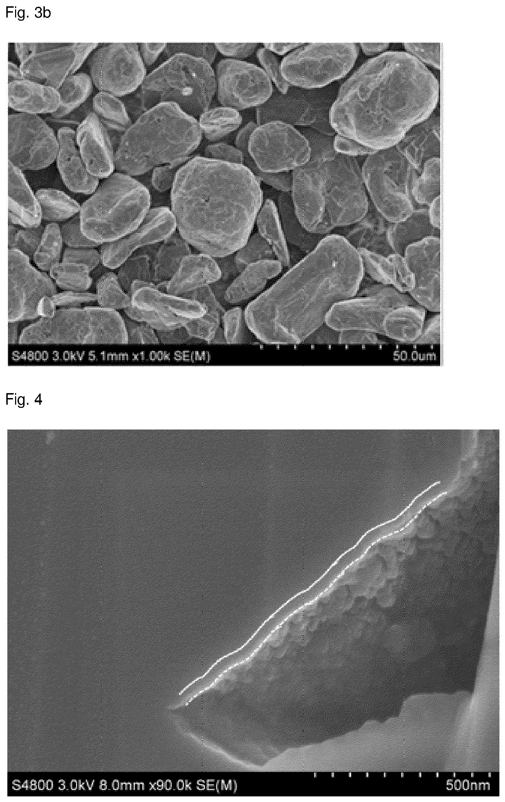

Fig. 3a was a scanning electron microscope diagram of the anode material prepared in Embodiment 1. Fig. 3b was a scanning electron microscope diagram of the anode material prepared in Embodiment 1 at another magnification ratio. As shown in Fig. 3a and Fig. 3b, the anode material particles prepared in Embodiment 1 had carbonaceous material-non-carbonaceous material nanoparticleco-composite and overall smooth surfaces.

Fig. 4 was a cross-sectional scanning electron microscope diagram of an anode material prepared in Embodiment 1. As shown in Fig. 4, a thickness of the compound layer of the anode material prepared in Embodiment 1 was about 60 nm.

### Embodiment 2

(1) 100 g of natural graphite was taken and dispersed in 200 ml of deionized water, and 5 g of an aniline monomer was added for full and uniform stirring, so as to form a first mixed solution.
(2) The above first mixed solution was placed at 45 °C for stirring, a stirring rate was controlled at 300 r/min, 15 ml (a concentration was 2 mol/L) of an ammonium persulfate aqueous solution was added dropwise at the same time, continuous stirring was performed for 120 min after the dropwise addition ended, so as to perform a polymerization reaction, and a first precursor was obtained through filtration and drying. The first precursor included a core and polyaniline located on a surface of the core, and the core included the natural graphite.
(3) 100 g of the first precursor was taken and well mixed with 200 ml of the deionized water, then 7.5 g of (NH₄)₂HPO₄ was added and uniformly stirred to form a second mixed solution, and the second mixed solution was stirred at 90 °C to volatilize a solvent for a drying treatment, so as to obtain a second precursor.
(4) Under a nitrogen atmosphere, the second precursor was heated to 1250 °C, and then subjected to a carbonization treatment for 4 hours, so as to obtain an anode material.

The anode material prepared in this embodiment included a core and a compound layer located on at least partial surface of the core, the compound layer included hard carbon and phosphorus pentoxide (P₂O₅), the core included the natural graphite, and a thickness of the compound layer was about 55 nm.

### Embodiment 3

(1) 100 g of natural graphite was taken and dispersed in 200 ml of deionized water, and 5 g of an aniline monomer was added for full and uniform stirring, so as to form a first mixed solution.
(2) The above first mixed solution was placed at 45 °C for stirring, a stirring rate was controlled at 300 r/min, 15 ml (a concentration was 2 mol/L) of an ammonium persulfate aqueous solution was added dropwise at the same time, continuous stirring was performed for 120 min after the dropwise addition ended, so as to perform a polymerization reaction, and a first precursor was obtained through filtration and drying. The first precursor included a core and polyaniline located on a surface of the core, and the core included the natural graphite.
(3) 100 g of the first precursor was taken and well mixed with 200 ml of the deionized water, then 7.5 g of NH₄F was added and uniformly stirred to form a second mixed solution, and the second mixed solution was stirred at 90 °C to volatilize a solvent for a drying treatment, so as to obtain a second precursor.
(4) Under a nitrogen atmosphere, the second precursor was heated to 1250 °C, and then subjected to a carbonization treatment for 4 hours, so as to obtain an anode material.

The anode material prepared in this embodiment included a core and a compound layer located on at least partial surface of the core, the compound layer included hard carbon and carbon fluoride (CF₄), the core included the natural graphite, and a thickness of the compound layer was 65 nm.

It was to be noted that, the CF₄ in the compound layer in this embodiment was a fluorine-doped carbon material, that is, the CF₄ in the compound layer included a carbonaceous material and a non-carbonaceous material.

### Embodiment 4

(1) 100 g of natural graphite was taken and dispersed in 200 ml of ethanol, and 10 g of a styrene monomer was added for full and uniform stirring, so as to form a first mixed solution.
(2) The above first mixed solution was placed at 65 °C and continuously stirred for 120 min to perform a polymerization reaction, a stirring rate was controlled at 400 r/min, and a first precursor was obtained through filtration and drying. The first precursor included a core and polystyrene located on a surface of the core, and the core included the natural graphite.
(3) 100 g of the first precursor was taken and well mixed with 200 ml of the deionized water, then 2.5 g of LiOH.H₂O was added and uniformly stirred to form a second mixed solution, and the second mixed solution was stirred at 90 °C to volatilize a solvent for a drying treatment, so as to obtain a second precursor.
(4) Under a nitrogen atmosphere, the second precursor was heated to 1250 °C, and then subjected to a carbonization treatment for 4 hours, so as to obtain an anode material.

The anode material prepared in this embodiment included a core and a compound layer located on at least partial surface of the core, the compound layer included hard carbon and lithium oxide (Li₂O), the core included the natural graphite, and a thickness of the compound layer was 55 nm.

### Embodiment 5

(1) 100 g of natural graphite was taken and dispersed in 200 ml of ethanol, and 10 g of a fluorostyrene monomer was added for full and uniform stirring, so as to form a first mixed solution.
(2) The above first mixed solution was placed at 65 °C and continuously stirred for 120 min to perform a polymerization reaction, a stirring rate was controlled at 500 r/min, and a first precursor was obtained through filtration and drying. The first precursor included a core and polyfluoro-styrene located on a surface of the core, and the core included the natural graphite.
(3) 100 g of the first precursor was taken and well mixed with 200 ml of the deionized water, then 2.5 g of LiOH.H₂O was added and uniformly stirred to form a second mixed solution, and the second mixed solution was stirred at 90 °C to volatilize a solvent for a drying treatment, so as to obtain a second precursor.
(4) Under a nitrogen atmosphere, the second precursor was heated to 1250 °C, and then subjected to a carbonization treatment for 4 hours, so as to obtain an anode material.

The anode material prepared in this embodiment included a core and a compound layer located on at least partial surface of the core, the compound layer included hard carbon, lithium fluoride (LiF), and lithium oxide (Li₂O), the core included the natural graphite, and a thickness of the compound layer was 55 nm.

### Embodiment 6

(1) 100 g of natural graphite was taken and dispersed in 200 ml of ethanol, and 10 g of a dopamine monomer was added for full and uniform stirring, so as to form a first mixed solution.
(2) The above first mixed solution was placed at 65 °C and continuously stirred for 180 min to perform a polymerization reaction, a stirring rate was controlled at 500 r/min, and a first precursor was obtained through filtration and drying. The first precursor included a core and polyfluoro-styrene located on a surface of the core, and the core included the natural graphite.
(3) 100 g of the first precursor was taken and well mixed with 200 ml of the deionized water, then 2.5 g of LiOH.H₂O was added and uniformly stirred to form a second mixed solution, and the second mixed solution was stirred at 90 °C to volatilize a solvent for a drying treatment, so as to obtain a second precursor.
(4) Under a nitrogen atmosphere, the second precursor was heated to 1250 °C, and then subjected to a carbonization treatment for 4 hours, so as to obtain an anode material.

The anode material prepared in this embodiment included a core and a compound layer located on at least partial surface of the core, the compound layer included soft carbon and lithium oxide (Li₂O), the core included graphite, and a thickness of the compound layer was 60 nm.

### Embodiment 7

(1) 100 g of natural graphite was taken and dispersed in 200 ml of deionized water, and 5 g of dopamine was added for full and uniform stirring, so as to form a first mixed solution.
(2) The above first mixed solution was placed at 40 °C for stirring, a stirring rate was controlled at 300 r/min, 15 ml (a concentration was 4 mol/L) of aqueous ammonia was added dropwise at the same time, continuous stirring was performed for 120 min after the dropwise addition ended, so as to perform a polymerization reaction, and a first precursor was obtained through filtration and drying. The first precursor included a core and polydopamine located on a surface of the core, and the core included the natural graphite.
(3) 100 g of the first precursor was taken and well mixed with 200 ml of the deionized water, then 2.5 g of LiOH.H₂O was added and uniformly stirred to form a second mixed solution, and the second mixed solution was stirred at 90 °C to volatilize a solvent for a drying treatment, so as to obtain a second precursor.
(4) Under a nitrogen atmosphere, the second precursor was heated to 1250 °C, and then subjected to a carbonization treatment for 4 hours, so as to obtain an anode material.

The anode material prepared in this embodiment included a core and a compound layer located on at least partial surface of the core, the compound layer included hard carbon and lithium oxide (Li₂O), the core included artificial graphite, and a thickness of the compound layer was 50 nm.

### Embodiment 8

A difference between this embodiment and Embodiment 1 lied in that, (3) 100 g of the first precursor was taken and well mixed with 200 ml of the deionized water, then 24.5 g of Al(NO₃)₃·9H₂O was added and uniformly stirred to form a second mixed solution, and the second mixed solution was stirred at 90 °C to volatilize a solvent for a drying treatment, so as to obtain a second precursor.

The anode material prepared in this embodiment included a core and a compound layer located on at least partial surface of the core, the compound layer included hard carbon and aluminum oxide (Al₂O₃), the core included graphite, and a thickness of the compound layer was 100 nm.

### Embodiment 9

A difference between this embodiment and Embodiment 1 lied in that, the natural graphite was converted into artificial graphite with same particle size distribution, and other process parameters were identical to those in Embodiment 1.

The anode material prepared in this embodiment included a core and a compound layer located on at least partial surface of the core, the compound layer included hard carbon and lithium oxide (Li₂O), the core included artificial graphite, and a thickness of the compound layer was 70 nm.

### Embodiment 10

A difference between this embodiment and Embodiment 1 lied in that, (4) under an argon atmosphere, the second precursor was heated to 2000 °C, and then subjected to a carbonization treatment for 4 hours, so as to obtain an anode material.

The anode material prepared in this embodiment included a core and a compound layer located on at least partial surface of the core, the compound layer included hard carbon and lithium oxide (Li₂O), the core included the natural graphite, and a thickness of the compound layer was 150 nm.

### Embodiment 11

A difference between this embodiment and Embodiment 1 lied in that, (4) under an argon atmosphere, the second precursor was heated to 1600 °C, and then subjected to a carbonization treatment for 4 hours, so as to obtain an anode material.

The anode material prepared in this embodiment included a core and a compound layer located on at least partial surface of the core, the compound layer included hard carbon and lithium oxide (Li₂O), the core included the natural graphite, and a thickness of the compound layer was 120 nm.

### Embodiment 12

A difference between this embodiment and Embodiment 1 lied in that, (1) 100 g of natural graphite was taken and dispersed in 200 ml of deionized water, and 5 g of an aniline monomer was added for full and uniform stirring, so as to form a first mixed solution, and the pH of the first mixed solution was regulated to 4.5 by adding a phosphoric acid solution.

The anode material prepared in this embodiment included a core and a compound layer located on at least partial surface of the core, the compound layer included hard carbon and lithium oxide (Li₂O), and the core included the natural graphite.

### Embodiment 13

A difference between this embodiment and Embodiment 1 lied in that, (1) 100 g of natural graphite was taken and dispersed in 200 ml of deionized water, and 5 g of an aniline monomer was added for full and uniform stirring, so as to form a first mixed solution, and the pH of the first mixed solution was regulated to 8.5 by adding a sodium hydroxide solution.

The anode material prepared in this embodiment included a core and a compound layer located on at least partial surface of the core, the compound layer included hard carbon and lithium oxide (Li₂O), and the core included the natural graphite.

### Comparative example 1

(1) 100 g of natural graphite was taken and dispersed in 200 ml of deionized water, and 5 g of an aniline monomer was added for full and uniform stirring, so as to form a mixed solution.
(2) The above mixed solution was placed at 45 °C for stirring, a stirring rate was controlled at 500 r/min, 15 ml (a concentration was 2 mol/L) of an ammonium persulfate aqueous solution was added dropwise at the same time, continuous stirring was performed for 120 min after the dropwise addition ended, so as to perform a polymerization reaction, and a precursor was obtained through filtration and drying. The precursor included a core and polyaniline located on a surface of the core, and the core included the natural graphite.
(3) Under a nitrogen atmosphere, the precursor was heated to 1250 °C, and then carbonized for 4 hours, so as to obtain an anode material.

The anode material prepared in this comparative example included a core and a carbon-coating layer located on at least partial surface of the core. The core included the natural graphite.

### Comparative example 2

(1) 100 g of a natural graphite material was taken and well mixed with 200 ml of deionized water, then 2.5 g of LiOH.H₂O was added and uniformly stirred to form a mixed solution, and the mixed solution was stirred at 90 °C for volatilization and dried, so as to obtain a precursor.
(3) Under a nitrogen atmosphere, the precursor was heated to 1250 °C, and then carbonized for 4 hours, so as to obtain an anode material.

The anode material prepared in this comparative example included a core and a lithium oxide-coating layer located on at least partial surface of the core. The core included the graphite.

### Comparative example 3

(1) Similar to Embodiment 9, 100 g of artificial graphite was taken and dispersed in 200 ml of deionized water, and 5 g of an aniline monomer was added for full and uniform stirring, so as to form a mixed solution.
(2) The above mixed solution was placed at 45 °C for stirring, a stirring rate was controlled at 300 r/min, 15 ml (a concentration was 2 mol/L) of an ammonium persulfate aqueous solution was added dropwise at the same time, continuous stirring was performed for 120 min after the dropwise addition ended, so as to perform a polymerization reaction, and a precursor was obtained through filtration and drying. The precursor included a core and polyaniline located on a surface of the core, and the core included the artificial graphite.
(3) Under a nitrogen atmosphere, the precursor was heated to 1250 °C, and then carbonized for 4 hours, so as to obtain an anode material.

The anode material prepared in this comparative example included a core and a carbon-coating layer located on at least partial surface of the core. The core included the artificial graphite.

### Test method

(1) Method for testing average particle size of anode material:
   A particle size distribution range of the anode material was tested by a Malvern laser particle analyzer.
(2) Method for testing specific surface area of anode material:
   At constant temperature and low temperature, adsorption capacities of gases with different relative pressures on a surface of a solid were determined, and then an adsorption capacity of a single molecule layer of a sample was solved based on a Brunauer-Emmett-Teller adsorption theory and a formula (BET formula) thereof, so as to calculate the specific surface area of the material.
(3) Observation of smoothness of particle surface of anode material:
   An S-4800 scanning electron microscope was used to observe the microscopic morphology of the surface of the anode material.
(4) Method for testing average particle size of non-carbonaceous material:
   An S-4800 scanning electron microscope was used to observe the microscopic morphology of the surface of the anode material and the particle size of the non-carbonaceous material. A 1 µm*1 µm region was taken randomly on the single anode material particle, particle size distribution of the non-carbonaceous material in the region was counted, and the average particle size of the non-carbonaceous material was calculated as G.
(5) Method for testing thickness of compound layer:
   A focused ion beam was used to cut a graphite particle to acquire a cross section, and the S-4800 scanning electron microscope was used to observe the microscopic morphology of the cross section of the anode material and the thickness of the compound layer.
(6) Testing for powder conductivity:
   A powder conductivity test system was used to test the powder conductivity of the anode material.
(7) Test for electrochemical performance

The anode materials were prepared in Embodiments 1-13 and Comparative examples 1-3, the anode material, carboxymethyl cellulose, and styrene butadiene rubber were respectively dissolved in deionized water according to a mass ratio of 96.5:1.5:1, a solid content was controlled to be 50%, the mixture was coated on a copper foil current collector, and vacuum drying was performed to prepare an anode plate; and a metallic lithium sheet was used as a counter electrode, and a button battery was assembled in a glove box filled with argon. At a current density of 0.1 C, a charging and discharging test was performed according to a charging and discharging interval being 0.01-1.5 V. Charging and discharging was cycled to obtain a first reversible specific capacity, a first cycle charging capacity, and a first cycle discharging capacity. Initial coulombic efficiency=first cycle discharging capacity/first cycle charging capacity. The cycling of charging and discharging was performed at different rates, so as to obtain rate performance.

The above performance test results were shown in Table 1 below.

**Table 1 Performance parameters of anode material prepared in embodiments and comparative examples and battery thereof**

| | Specific surface area of core (m²/g) | Specific surface area of anode material (m²/g) | G value (nm) | Mass ratio C value of compou nd layer to core | Mass ratio D value of carbonaceous material to non-carbonac eous material | E value | Capacity (mAh/g) | Initial coulom bic efficien cy (%) | 2C/0.2 C charge rate (%) |
|---|---|---|---|---|---|---|---|---|---|
| Embodi ment 1 | 6.78 | 3.53 | 40.2 | 0.06 | 5.02 | 4.39 | 364.4 | 94.6 | 22.56 |
| Embodi ment 2 | 7.12 | 3.92 | 42.5 | 0.13 | 15.10 | 5.43 | 365.5 | 94.8 | 17.82 |
| Embodi ment 3 | 7.03 | 3.74 | 37.6 | 0.10 | 14.32 | 4.94 | 366.4 | 94.2 | 20.53 |
| Embodi ment 4 | 8.36 | 3.52 | 39.8 | 0.08 | 5.26 | 4.10 | 365.4 | 94.5 | 19.64 |
| Embodi ment 5 | 8.96 | 3.46 | 40.3 | 0.09 | 0.51 | 4.86 | 366.2 | 94.6 | 20.36 |
| Embodi ment 6 | 11.28 | 3.57 | 41.7 | 0.03 | 6.34 | 4.09 | 366.4 | 94.5 | 19.57 |
| Embodi ment 7 | 6.58 | 3.62 | 38.2 | 0.06 | 4.95 | 4.16 | 363.7 | 94.5 | 22.37 |
| Embodi ment 8 | 6.78 | 3.68 | 42.3 | 0.39 | 65.74 | 4.52 | 364.0 | 94.3 | 23.31 |
| Embodi ment 9 | 2.36 | 1.73 | 45.9 | 0.06 | 4.38 | 4.36 | 355.1 | 96.4 | 27.31 |
| Embodi ment 10 | 6.78 | 3.49 | 125. 8 | 0.05 | 6.82 | 4.31 | 364.6 | 94.6 | 22.60 |
| Embodi ment 11 | 6.78 | 3.20 | 87.2 | 0.05 | 5.97 | 4.35 | 364.2 | 94.7 | 19.78 |
| Embodi ment 12 | 6.78 | 3.35 | 36.4 | 0.05 | 5.12 | 4.53 | 363.2 | 94.6 | 23.05 |
| Embodi ment 13 | 6.78 | 3.62 | 40.5 | 0.06 | 5.41 | 3.92 | 362.8 | 94.5 | 22.15 |
| Compar ative exampl e 1 | 8.37 | 4.27 | -- | 0.005 | -- | 1.65 | 362.9 | 93.7 | 12.90 |
| Compar ative exampl e 2 | 8.37 | 12.08 | 163. 8 | 0.02 | -- | 1.16 | 356.8 | 93.3 | 10.80 |
| Compar ative exampl e 3 | 2.36 | 1.94 | -- | 0.005 | -- | 1.75 | 352.3 | 95.7 | 24.07 |

As shown in Table 1, in Embodiments 1-13, by performing the polymerization reaction on the first mixed solution containing the graphite and the organic molecular monomer to obtain the first precursor, a polymer formed through polymerization of the organic molecular monomer was compounded on surfaces of graphite particles to form the polymer layer. The polymer has a highly-reactive functional group. Then, the second mixed solution containing the first precursor and the inorganic salt was well mixed and dried, during drying, inorganic ions were formed through hydrolysis of the inorganic salt in the second mixed solution, and through a grafting reaction between the highly-reactive functional group in the polymer and the inorganic ions, the inorganic ions were grafted and introduced into the polymer layer on the surfaces of the graphite particles, so as to obtain the second precursor. Finally, the carbonization treatment was performed on the second precursor, through the carbonization treatment, in situ cracking occurs in the organic molecules in the polymer layer to obtain the carbonaceous material, and the inorganic ions were in situ converted into the non-carbonaceous material at the same time, so as to form the compound layer containing the carbonaceous material and the non-carbonaceous material on the surfaces of the graphite particles. The surface of the prepared anode material has the uniformly-coated compound layer. By means of a synergistic effect of the carbonaceous material and the non-carbonaceous material in the compound layer, a specific surface value of the anode material can be reduced, and the high-temperature storage performance and electrode plate processing performance of the anode material can be improved. The interface stability of the anode material may also be improved, an interface side reaction may be reduced, the wettability of electrolyte may be improved, lithium ion transmission efficiency may be improved, the reversible capacity and initial coulombic efficiency of the anode material are improved, thereby improving the rate performance of the anode material.

Compared with Embodiment 1, the carbonization treatment was directly performed on the first precursor during the preparation of the anode material in Comparative example 1, the coating layer in the prepared anode material was a single carbon-coating layer, which easily undergone an irreversible reaction with electrolyte components, leading to continuous repair and generation of an SEI film, reduction in the interface stability of the anode material, intensification of side reactions with electrolyte, reduction in lithium ion transmission efficiency, reduction in powder conductivity of anode material, and reduction in reversible capacity, initial coulombic efficiency, and rate performance of the anode material.

Compared with Embodiment 1, the natural graphite material and the non-carbonaceous material were compounded directly during the preparation of the anode material in Comparative example 2, and the coating layer in the prepared anode material was a single non-carbonaceous material coating layer, leading to a large specific surface area of the anode material, an increase in contact between the material and the electrolyte, intensification of interface side reactions, reduction in the interface stability of the material, and reduction in lithium ion transmission efficiency, thus resulting in reduction in the powder conductivity of anode material, and reduction in reversible capacity and rate performance, and the initial coulombic efficiency was also significantly reduced.

The artificial graphite in Embodiment 9 and Comparative example 3 was used as a raw material. Compared with Embodiment 9, the carbonization treatment was directly performed on the first precursor during the preparation of the anode material in Comparative example 3, the coating layer in the prepared anode material was a single carbon-coating layer, the surface stability of the anode material was low, side reactions with the electrolyte at low potential were more intense, and different degrees of deterioration occurred in performance indexes such as the initial coulombic efficiency, the powder conductivity, the rate performance, etc.

The applicant declared that the present disclosure illustrated the detailed process devices and process flows of the present disclosure by the above embodiments, but the present disclosure was not limited to the above detailed process devices and process flows, i.e., it did not mean that the present disclosure had to rely on the above detailed process devices and process flows in order to be implemented. It should be clear to those skilled in the art that any improvements to the present disclosure, the equivalent substitution of raw materials of a product of the present disclosure and the addition of auxiliary ingredients, the selection of specific methods, etc., fallen within the scope of protection and disclosure of the present disclosure.

## Claims

1. An anode material, comprising a core and a compound layer located on at least partial surface of the core, wherein the core comprises graphite, and the compound layer comprises a carbonaceous material and a non-carbonaceous material.

2. The anode material according to claim 1, wherein the non-carbonaceous material is dispersed in the carbonaceous material.

3. The anode material according to claim 1, wherein a general chemical formula of the non-carbonaceous material is AₓB_{y}, wherein 1≤x≤3, 1≤y≤5, element A comprises at least one of Li, Na, K, Ca, Mg, Al, Zn, Ti, Nb, Zr, Mo, P, Si, or B, and element B comprises at least one of B, O, F, Si, P, S, Br, or Cl.

4. The anode material according to claim 1, meeting at least one of the following technical features:
(1) the graphite comprises at least one of natural graphite, artificial graphite, or microcrystalline graphite;
(2) a median particle size of the core is D₅₀, wherein 0.5 µm≤D₅₀≤30 µm;
(3) a mass content of carbon in the graphite is ≥80%;
(4) the carbonaceous material comprises at least one of amorphous carbon or graphite carbon;
(5) a thickness of the compound layer is 1 nm-200 nm;
(6) the non-carbonaceous material comprises at least one of LiF, NaF, MgF₂, MgO, P₂O₅, Al₂O₃, SiO₂, or B₂O₃; or
(7) an average particle size of the non-carbonaceous material is G, and G≤150 nm.

5. The anode material according to any one of claims 1 to 3, meeting at least one of the following technical features:
(1) a mass ratio of the compound layer to the core is C, and 0.01≤C≤0.5;
(2) a mass ratio of the carbonaceous material to the non-carbonaceous material is D, and 0.1≤D≤80;
(3) powder conductivity of the core is E1, powder conductivity of the anode material is E2, a ratio of E2 to E1 is E, and 1 <E<1000;
(4) a specific surface area of the core is 6 m²/g-15 m²/g; or
(5) a specific surface area of the anode material is 1 m²/g-5 m²/g.

6. A method for preparing an anode material, comprising the following steps:
preparing a first precursor, wherein the first precursor comprises a core and a polymer layer formed on a surface of the core, and the core comprises graphite;
attaching an inorganic salt to a surface of the first precursor to obtain a second precursor; and
performing a carbonization treatment on the second precursor to obtain an anode material.

7. The preparation method according to claim 6, wherein preparing the first precursor comprises the following steps:
performing a polymerization reaction on a first mixed solution containing the graphite and an organic molecular monomer, and performing solid-liquid separation and drying to obtain the first precursor.

8. The preparation method according to claim 6, wherein attaching the inorganic salt to the surface of the first precursor to obtain the second precursor comprises the following steps: drying a second mixed solution containing the first precursor and the inorganic salt to obtain a second precursor.

9. The preparation method according to claim 7, meeting at least one of the following technical features:
(1) the graphite comprises at least one of natural graphite, artificial graphite, or microcrystalline graphite;
(2) a median particle size of the graphite is 0.5 µm-30 µm;
(3) a mass ratio of the graphite to the organic molecular monomer is 1:(0.01-0.4);
(4) the organic molecular monomer comprises at least one of aniline, styrene, fluorostyrene, hydroxyethyl acrylate, acrylate, pyrrole, vinylidene fluoride, tetrafluoroethylene, or dopamine; or
(5) the first mixed solution and the second mixed solution both comprise solvents, and the solvents comprise at least one of water, methanol, ethanol, acetone, N-methyl-2-pyrrolidone, or N,N-dimethylformamide.

10. The preparation method according to claim 7, meeting at least one of the following technical features:
(1) the first mixed solution further comprises an auxiliary agent;
(2) the first mixed solution further comprises an auxiliary agent, and a mass concentration of the auxiliary agent in the first mixed solution is 0.01 mol/L-4 mol/L;
(3) the first mixed solution further comprises anauxiliary agent, the auxiliary agent comprises an initiator, and the initiator comprises at least one of ammonium persulfate, sodium persulfate, potassium persulfate, aluminum chloride, or hydrogen peroxide;
(4) the first mixed solution further comprises anauxiliary agent, the auxiliary agent comprises a catalyst, and the catalyst comprises at least one of sodium hydroxide, lithium hydroxide, potassium hydroxide, aqueous ammonia, or sodium carbonate;
(5) the first mixed solution further comprises anauxiliary agent, the auxiliary agent comprises a pH regulator, and the pH regulator comprises at least one of an acidic pH reagent or an alkaline pH reagent;
(6) the first mixed solution further comprises anauxiliary agent, the auxiliary agent comprises the pH regulator, and the pH of the first mixed solution is 4-10;
(7) the first mixed solution further comprises anauxiliary agent, the auxiliary agent comprises the pH regulator, and the pH regulator comprises at least one of hydrochloric acid, sulfuric acid, phosphoric acid, or nitric acid; or
(8) the first mixed solution further comprises anauxiliary agent, the auxiliary agent comprises the pH regulator, and the pH regulator comprises at least one of lithium hydroxide, sodium hydroxide, potassium hydroxide, sodium carbonate, or sodium bicarbonate.

11. The preparation method according to claim 7, meeting at least one of the following technical features:
(1) a temperature for the polymerization reaction is 40 °C-100 °C;
(2) a time for the polymerization reaction is 3 h-48 h;
(3) the polymerization reaction is performed while stirring;
(4) the polymerization reaction is performed in a stirring state, and a stirring rate is 50 r/min-1000 r/min; or
(5) the solid-liquid separation comprises at least one of filtration or centrifugation.

12. The preparation method according to claim 8, meeting at least one of the following technical features:
(1) the inorganic salt comprises at least one of lithium hydroxide, sodium hydroxide, potassium hydroxide, magnesium nitrate, calcium chloride, aluminum nitrate, zinc nitrate, titanium n-propoxide, columbium oxalate, zirconyl chloride octahydrate, ammonium molybdate tetrahydrate, ammonium dihydrogen phosphate, diammonium hydrogen phosphate, sodium metasilicate, sodium borate, ammonium fluoride, titanium oxysulfate, zinc bromide, or zirconium chloride;
(2) a mass ratio of the first precursor to the inorganic salt is 1:(0.001-0.1);
(3) the drying comprises at least one of natural volatilization, blast drying, flash drying, freeze drying, inert atmosphere protection drying, or vacuum drying;
(4) a temperature for drying is 60 °C-600 °C;
(5) a time for drying is 0.5 h-48 h;
(6) the carbonization treatment is performed under a protective atmosphere;
(7) the carbonization treatment is performed under the protective atmosphere, and the protective atmosphere comprises at least one of nitrogen, helium, neon, argon, or air;
(8) a heating rate of the carbonization treatment is 1 °C/min-20 °C/min;
(9) a temperature-holding temperature for the carbonization treatment is 600 °C-2500 °C; or
(10) a temperature-holding time for the carbonization treatment is 0.1 h-10 h.

13. A lithium ion battery, comprising the anode material according to any one of claims 1 to 5 or an anode material prepared by the method for preparing an anode material according to any one of claims 6 to 12.
